# EUROPEAN PATENT SPECIFICATION

(11) **EP 4 138 195 B1**
(45) Date of publication and mention of the grant of the patent: **30.04.2025**
(21) Application number: 21869631.8
(22) Date of filing: 09.09.2021
(51) Int. Cl.: H01M 50/105, H01M 50/184, H01M 50/186, H01M 50/193, H01M 50/317, H01M 50/325, H01M 50/342

(54) **SECONDARY BATTERY**
SEKUNDÄRBATTERIE
BATTERIE SECONDAIRE

(30) Priority: 17.09.2020 KR 20200119829; 03.09.2021 KR 20210117966
(43) Date of publication of application: 22.02.2023
(60) Divisional application: 25160125.8
(73) Proprietor: LG Energy Solution, Ltd., Seoul 07335 (KR)
(72) Inventor: NOH, Tae Heon, Daejeon 34122 (KR)
(74) Representative: Plasseraud IP
(86) International application number: PCT/KR2021/012297
(87) International publication number: WO 2022/060009

(56) References cited:
- WO-A2-2017/094957
- JP-A- H0 740 491
- JP-A- H1 186 823
- KR-A- 20130 053 102
- KR-A- 20140 141 429
- KR-A- 20160 106 932
- KR-A- 20200 001 052
- US-A1- 2015 147 634

## Description

### CROSS-REFERENCE TO RELATED APPLICATION

The present application claims the benefit of the priority of Korean Patent Application Nos. 10-2020-0119829, filed on September 17, 2020, and 10-2021-0117966, filed on September 03, 2021.

### TECHNICAL FIELD

The present invention relates to a secondary battery, and more particularly, to a secondary battery, which is capable of resealing a gas discharge part, through which a gas is discharged, to prevent an electrolyte and the gas within a pouch from being continuously discharged.

### BACKGROUND ART

In general, secondary batteries refer to chargeable and dischargeable batteries, unlike primary batteries that are not chargeable. Such a secondary battery is being widely used in the high-tech electronic fields such as mobile phones, notebook computers, and camcorders.

The secondary batteries are classified into a can type secondary battery, in which an electrode assembly is embedded in a can, and a pouch type secondary battery in which an electrode assembly is embedded in a pouch. Also, the pouch type secondary battery comprises an electrode assembly, an electrode lead coupled to an electrode tab of the electrode assembly, and a pouch accommodating the electrode assembly in a state in which a front end of the electrode lead is drawn out. Also, the pouch comprises an accommodation part accommodating the electrode assembly and a sealing part that seals the accommodation part. WO 2017/094957, US 2015/147634 and KR 2020 0001052 disclose a pouch for a secondary battery.

However, when a pressure within a pouch increases due to an increase in thickness of an electrode while the secondary battery or the gas and electrode, which are generated as internal byproducts and reaction byproducts, is deteriorated, there is a problem in that a sealing part having weak sealing force in the sealing part of the pouch is opened, and thus, the electrolyte and the gas are discharged.

In order to solve the above problem, the pouch is provided with a gas discharge part that discharges the gas while being opened first rather than the sealing part when a gas pressure inside the pouch increases.

However, the gas discharge part may be maintained in an opened state even when the gas inside the pouch is removed. Accordingly, there is a problem in that the residual electrolyte and gas inside the pouch are continuously discharged, resulting in secondary contamination and accidents.

### DISCLOSURE OF THE INVENTION

### TECHNICAL PROBLEM

A secondary battery according to the present invention for solving the above problems is to prevent a residual electrolyte and gas within a pouch from being continuously discharged by comprising a self-restoring adhesion means that reseals the gas discharge part provided in the pouch, thereby preventing secondary contamination and accidents from occurring.

### TECHNICAL SOLUTION

A secondary battery according to the present invention defined in claim 1 for achieving the above object comprises: an electrode assembly; a pouch in which the electrode assembly is accommodated and provided with a gas discharge part; a first adhesive material which is configured to seal the gas discharge part through adhesive force and is broken when a pressure within the pouch increases above a set pressure to open the gas discharge part; and a self-restoring adhesive member configured to reseal the opened gas discharge part through the adhesive force so as to prevent the gas from being discharged to the gas discharge part.

The pouch comprises: a first case provided with a first accommodation surface configured to accommodate one end of the electrode assembly, a first unsealing surface provided on a portion of an edge of the first accommodation surface, and a first sealing surface provided on a remaining portion of the edge of the first accommodation surface; and a second case provided with a second accommodation surface configured to accommodate the other end of the electrode assembly, a second unsealing surface provided on a portion of an edge of the second accommodation surface, and a second sealing surface 122c provided on a remaining portion of the edge of the second accommodation surface, wherein the gas discharge part may be formed between the first unsealing surface and the second unsealing surface, which correspond to each other, the first adhesive material may be provided between the first unsealing surface and the second unsealing surface, and the first unsealing surface and the second unsealing surface adhere to each other to seal the gas discharge part, wherein, when the pressure within the pouch increases above the set pressure, adhesive force between the first unsealing surface and the second unsealing surface may be broken to open the gas discharge part, the self-restoring adhesive member may be provided with a second adhesive material and a capsule in which the second adhesive material is embedded and adheres between the first unsealing surface and the second unsealing surface by the first adhesive material, and in the self-restoring adhesive member, when a gap between the first unsealing surface and the second unsealing surface is widened by the gas discharged to the gas discharge part, the capsule may be split or broken to allow the second adhesive material to flow out so that the first unsealing surface and the second unsealing surface adhere again to each other by the second adhesive material that flows out so as to reseal the gas discharge part.

The self-restoring adhesive member is provided in plurality, and the plurality of self-restoring adhesive members are provided to be dispersed throughout the first adhesive material.

The first adhesive material may be provided as an epoxy resin adhesive.

The second adhesive material may be provided as the same material as the first adhesive material.

The first adhesive material may have adhesive strength less than that between the first sealing surface and the second sealing surface.

The gas discharge part may be formed on a pouch in which an electrode tab provided in the electrode assembly is disposed.

In an embodiment not according to the claimed invention, through-hole having a size less than that of the discharge port may be formed in an inner surface of an accommodation part, in which the discharge port is formed, and an insulator configured to support the opening/closing surface may be attached on the inner surface of the accommodation part.

The pouch is provided with an elastic member configured to provide elastic force so that the first unsealing surface and the second unsealing surface are maintained in a close contact with each other.

The capsule may be made of a thermoplastic resin material and have a diameter of 3 µm to 5 µm.

### ADVANTAGEOUS EFFECTS

The secondary battery according to the present invention may comprise the self-restoring adhesive means constituted by the first adhesive material and the self-restoring adhesive member to reseal the gas discharge part after the gas is discharged through the gas discharge part of the pouch, thereby preventing the residual electrolyte and gas within the pouch from being continuously discharged, and also preventing the secondary contamination and accidents from occurring.

### BRIEF DESCRIPTION OF THE DRAWINGS

FIG. 1 is a perspective view of a secondary battery according to a first embodiment of the present invention.
FIG. 2 is a plan view of FIG. 1.
FIG. 3 is a cross-sectional view taken along line A-A of FIG. 2.
FIG. 4 is a cross-sectional view illustrating a self-restoring adhesive member of the secondary battery according to the first embodiment of the present invention.
FIG. 5 is a cross-sectional view illustrating a gas discharge part of the secondary battery according to the first embodiment of the present invention.
FIG. 6 is an enlarged view of a portion B illustrated in FIG. 5.
FIG. 7 is a front view illustrating an elastic member of the secondary battery according to the first embodiment of the present invention.
FIG. 8 is a cross-sectional view illustrating a state in which the gas discharge part of the secondary battery is resealed according to the first embodiment of the present invention.
FIG. 9 is a perspective view of a secondary battery according to a second embodiment, not part of the present invention.
FIG. 10 is a cross-sectional view of the secondary battery according to the second embodiment, not part of the present invention.
FIG. 11 is a plan view of the secondary battery according to the second embodiment, not part of the present invention.
FIG. 12 is an enlarged view of a portion D illustrated in FIG. 11.
FIG. 13 is a cross-sectional view illustrating a state in which a gas discharge part of the secondary battery is opened according to the second embodiment, not part of the present invention.
FIG. 14 is a cross-sectional view illustrating an elastic member of the secondary battery according to the second embodiment, not part of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

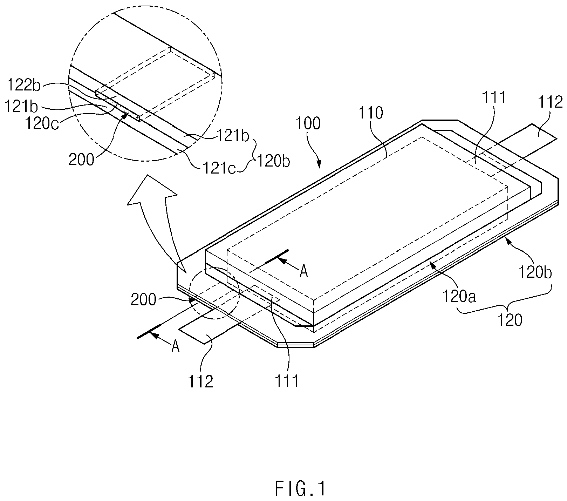

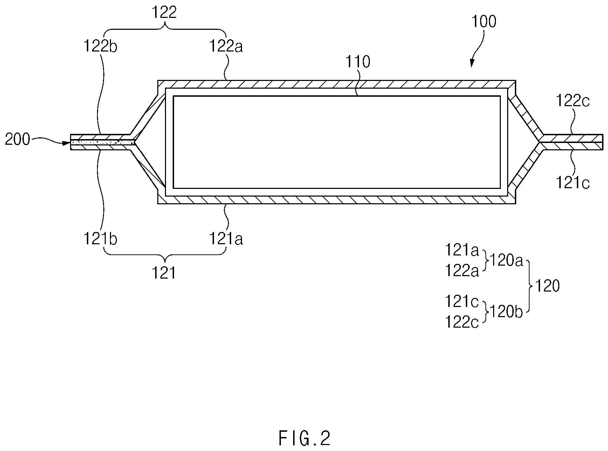

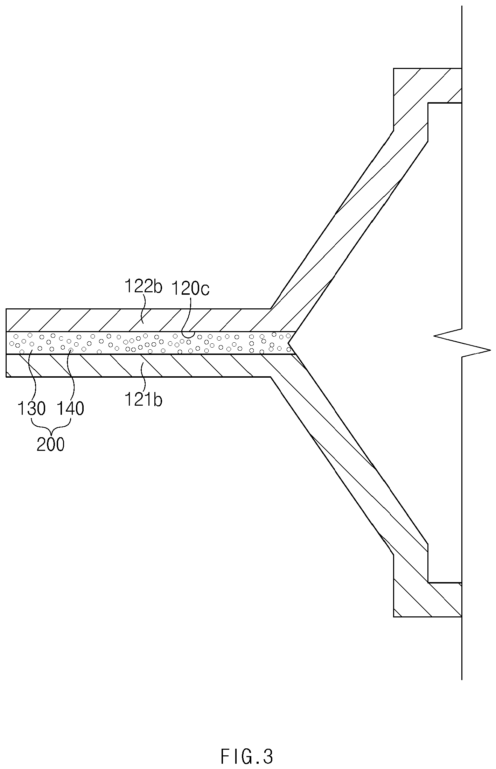

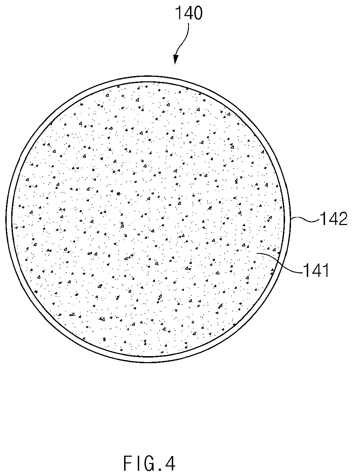

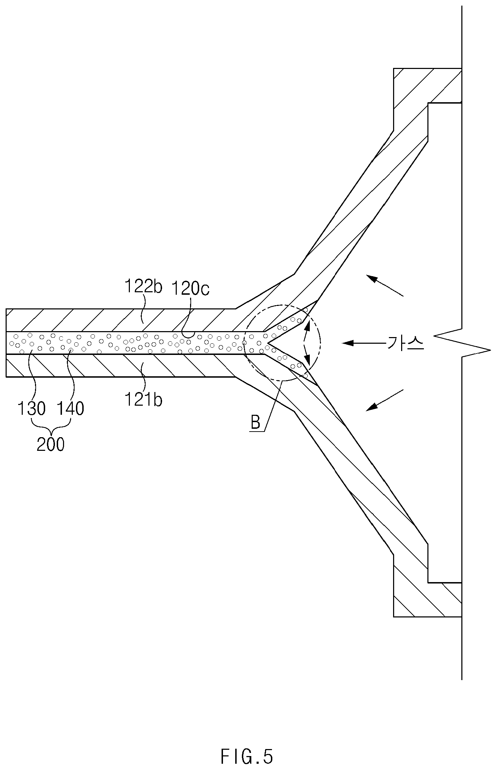

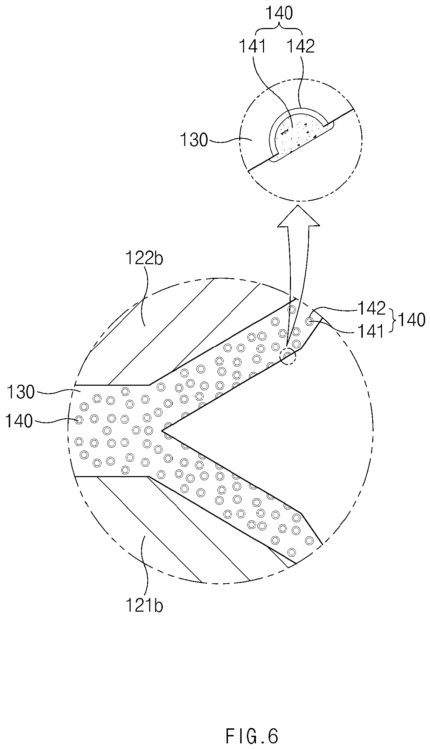

As illustrated in FIGS. 1 to 8, a secondary battery 100 according to the first embodiment of the present invention comprises an electrode assembly 110, a pouch 120 accommodating the electrode assembly 110, and a self-restoring adhesive means 200 that seals a gas discharge part 120c of the pouch 120 so as to open the gas discharge part 120c when an internal pressure of the pouch 120 increases above a set pressure and reseal the gas discharge part 120c when the internal pressure of the pouch 120 decreases below the set pressure.

In addition, the self-restoring adhesive means 200 comprises a first adhesive material 130 that opens the gas discharge part 120c while adhesive force is broken when a pressure within the pouch 120 increases, and a self-restoring adhesive member 140, which reseals the opened gas discharge part 120 through adhesive force when the pressure within the pouch 120 decreases to prevent a gas from being discharged to the gas discharge part 120c.

### Electrode assembly

The electrode assembly 110 has a structure in which electrodes and separators are alternately stacked. An electrode tab 111 is provided on each of the electrode, and an electrode lead 112 is coupled to the electrode tab 111.

The electrodes comprise a positive electrode and a negative electrode, the electrode tabs 111 comprise a positive electrode tab and a negative electrode tab, and the electrode leads 112 comprise a positive electrode lead and a negative electrode lead.

Here, the electrode tab 111 and the electrode lead 112 are disposed to partially overlap each other, and then, an overlapping surface of the electrode tab 111 and the electrode lead 112 is welded through ultrasonic waves to bond the electrode tab 111 to the electrode lead 112.

### Pouch

The pouch 120 is configured to accommodate the electrode assembly 110 and comprises an accommodation part 120a accommodating the electrode assembly 110, a sealing part 120b sealing the accommodation part 120a, and a gas discharge part 120c discharging a gas generated in the accommodation part 120a.

The pouch 120 is formed by bonding a first case 121 and a second case 122 having shapes corresponding to each other.

That is, the first case 121 comprises a first accommodation surface 121a accommodating one end of the electrode assembly, a first unsealing surface 121b provided on some of edges of the first accommodation surface 121a, and a first sealing surface 121c provided on the rest of the edges of the first accommodation surface 121a.

The second case 122 comprises a second accommodation surface 122a accommodating the other end of the electrode assembly 110, a second unsealing surface 122b provided on some of edges of the second accommodation surface 122a, and a second sealing surface 122c provided on the rest of the edges of the second accommodation surface 122a.

In the first and second cases 121 and 122 having the above-described structure, the first accommodation surface 121a and the second accommodation surface 122a are connected to each other to form the accommodation part 120a accommodating the electrode assembly 110, and the gas discharge part 120c that discharges a gas is formed between the first unsealing surface 121b and the second unsealing surface 122b. Also, the first sealing surface 121c and the second sealing surface 122c are sealed to form the sealing part 120b.

The self-restoring adhesive means 200 is provided in the gas discharge part 120c formed between the first unsealing surface 121b and the second unsealing surface 122b. That is, the self-restoring adhesive means 200 seals the gas discharge part 120c so as to open the gas discharge part 120c when the pressure within the pouch 120 increases above the set pressure and reseal the gas discharge part 120c when the pressure within the pouch 120 decreases below the set pressure.

For example, the self-restoring adhesive means 200 comprises a first adhesive material 130 and a self-restoring adhesive member 140.

### First adhesive material

The first adhesive material 130 is configured to open the gas discharge part 120c when the pressure inside the pouch 120 increases above the set pressure. That is, the first adhesive material 130 is provided between the first unsealing surface 121b and the second unsealing surface 122b to allow the first unsealing surface 121b and the second unsealing surface 122b to adhere to each other, thereby sealing the gas discharge part 120c. That is, the first adhesive material 130 is applied between the first unsealing surface 121b and the second unsealing surface 122b to seal the overlapping surface between the first unsealing surface 121b and the second unsealing surface 122b through adhesive force.

Here, the set pressure may be 30 kgf/cm² to 50 kgf/cm². That is, the adhesive force of the first adhesive material 130 may be broken to open the gas discharge part when the pressure within the pouch 120 reaches the set pressure, i.e., a reference value. In other words, the first adhesive material has adhesive force that is broken at the reference value.

When the internal pressure of the pouch 120 increases above adhesive strength of the first adhesive material 130, the first adhesive material 130 that bonds the first unsealing surface 121b to the second unsealing surface 122b is broken, and thus, a gap between the first unsealing surface 121b and the second unsealing surface 122b is gradually widened. As a result, the gas discharge part 120c is opened to discharge the gas inside the pouch 120 to the outside.

Such the first adhesive material 130 seals the gas discharge part 120c of the pouch 120 through the adhesive force, and when the internal pressure of the pouch 120 increases above the adhesive force of the first adhesive material 130, the adhesive force, through which the gas discharge part 120c is sealed, is broken to open the gas discharge part 120c.

The first adhesive material 130 may be an epoxy resin adhesive.

The adhesive strength of the first adhesive material 130 has adhesive strength less than that between the first sealing surface 121c and the second sealing surface 122c. Accordingly, when the internal pressure of the pouch 120 increases, the gas discharge part 120c between the first unsealing surface 121b and the second unsealing surface may be opened first rather than the sealing part 120b between the first sealing surface 121c and the second sealing surface 122c.

### Self-restoring adhesive member

The self-restoring adhesive member 140 may reseal the opened gas discharge part 120c through the adhesive force thereof when the pressure within the pouch decreases below the set pressure to prevent the gas or the electrolyte within the pouch 120 from being continuously discharged, thereby preventing the secondary contamination and accidents from occurring.

That is, the self-restoring adhesive member 140 comprises a second adhesive material 141 and a capsule 142 in which the second adhesive material 141 is embedded.

The self-restoring adhesive member 140 having the above-described structure is provided in plurality, and the plurality of self-restoring adhesive members 140 are attached between the first unsealing surface 121b and the second unsealing surfaces 122b through the adhesive force of the first adhesive material 130.

Accordingly, in the self-restoring adhesive member 140, when the gap between the first unsealing surface 121b and the second unsealing surface 122b is widened by the gas discharged from the gas discharge part 120c, the capsule 142 may be split or broken (i.e., destroyed and cracked), and thus, the second adhesive material 141 may flow out. Then, the first unsealing surface 121b and the second unsealing surface 122b may adhere again to each other by adhesive force of the second adhesive material 141, which flows out, to reseal the gas discharge part 120c.

That is, when the gap between the first unsealing surface 121b and the second unsealing surface 122b is widened, the capsules 142 disposed on the split surface are pulled to each other, and thus, the capsules 142 are split or broken. As a result, the second adhesive material 141 flows out.

Thereafter, when the gas pressure inside the pouch 120 decreases below the set pressure, the first unsealing surface 121b and the second unsealing surface 122b may return to their original positions. Here, the first unsealing surface 121b and the second unsealing surface 122b may adhere again to each other to reseal the gas discharge part 120c formed between the first unsealing surface 121b and the second unsealing surface 122b.

The second adhesive material 141 may be made of the same material as the first adhesive material 130. In addition, the capsule 142 may be made of a material that is capable of being split or broken. For example, the capsule 142 may be made of a thermoplastic resin, for example, may be any one of polyethylene, nylon, and a polyacetal resin. In addition, the capsule 142 has a diameter of 3 µm to 5 µm, preferably 4 µm. The second adhesive material is stored in a liquid state inside the capsule, and when the second adhesive material flows out of the capsule, the second adhesive material is gradually solidified to allow the first unsealing surface 121b and the second unsealing surface 122b to adhere to each other.

In another embodiment, the second adhesive material 141 may be made of a material having adhesive force greater than that of the first adhesive material 130. That is, since the first adhesive material 130 allows the first unsealing surface 121b and the second unsealing surface 122b to adhere to each other before the gas is discharged, the gap between the first unsealing surface 121b and the second unsealing surface 122b may be precisely sealed. However, since the second adhesive material 141 allows the first unsealing surface 121b and the second unsealing surface 122b to self-adhere to each other, the gap between the first unsealing surface 121b and the second unsealing surface 122b may not be precisely sealed when compared to the first adhesive material 130. Thus, the second adhesive material 141 may be made of the material having the adhesive strength greater than that of the first adhesive material 130 so that the first unsealing surface 121b and the second unsealing surface 122b more precisely adhere to each other. As a result, the gas discharge part 120c of the pouch 120 may be stably resealed.

The second adhesive material 141 may have the same adhesive strength or strong adhesive strength between the first and second sealing surfaces 122c.

The gas discharge part 120c is formed on the pouch 120 in which the electrode lead 112 having the weakest sealing force is disposed. Thus, when the gas pressure inside the pouch 120 increase, it is possible to induce the gas discharge part 120c to be opened first before a gap between the electrode lead 112 and the sealing part 120b is opened, and as a result, the gas within the pouch 120 may be discharged stably.

The first adhesive material 130 and the plurality of self-restoring adhesive members 140 are mixed at a set weight percent, and the self-restoring adhesive member 140 contains more weight percent than that of the first adhesive material 130. Also, the plurality of self-restoring adhesive members 140 are provided to be uniformly dispersed throughout the first adhesive material 130 so that the first unsealing surface 121b and the second unsealing surface 122b adhere again to each other. In addition, a space between the plurality of self-restoring adhesive members 140 adhering between the first unsealing surface 121b and the second unsealing surface 122b is sealed by the first adhesive material 130.

The secondary battery 100 according to the first embodiment of the present invention further comprises the elastic member 160 for allowing the first unsealing surface 121b and the second unsealing surface 122b to quickly return to their original positions when the pressure inside the pouch 120 decreases below the set gas pressure, the first unsealing surface 121b and the second unsealing surface 122b are separated.

### Elastic member

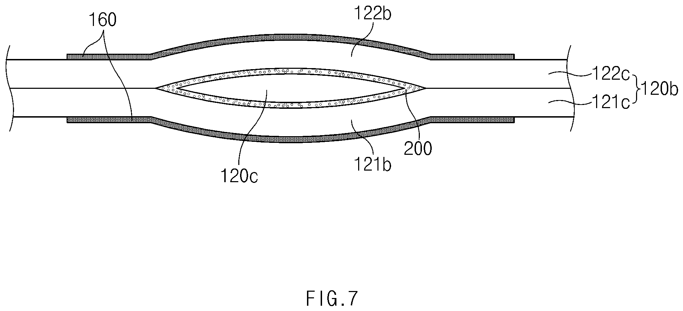

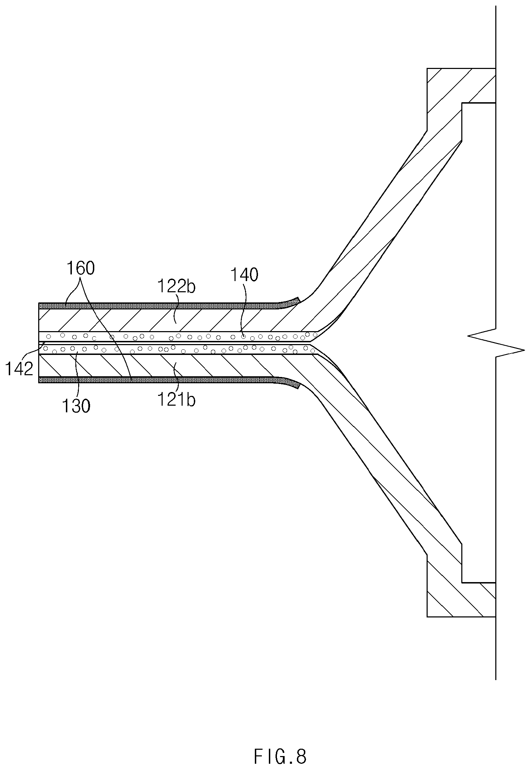

The elastic member 160 is made of a material having elastic restoring force, insulation, and heat resistance, and is provided on each of outer surfaces of the first unsealing surface 121b and the second unsealing surface 122b. That is, in the elastic member 160, as illustrated in FIG. 7, when the gas is completely discharged in a state in which the gap between the first unsealing surface 121b and the second unsealing surface 122b are widened by the gas discharge, as illustrated in FIG. 8, the first unsealing surface 121b and the second unsealing surface 122b are horizontally spread so that the first unsealing surface 121b and the second unsealing surface 122b are disposed to be in close contact with each other, and accordingly, the gap between the first unsealing surface 121b and the second unsealing surface 122b may stably adhere again to each other by the second adhesive material 141.

Therefore, the secondary battery 100 according to the first embodiment of the present invention may comprise the first adhesive material 130 and the self-restoring adhesive member 140 so that when the pressure inside the pouch 120 increases, the gas is effectively discharged through the gas discharge part 120c, and when the pressure inside the pouch 120 decreases, the gas discharge part 120c of the pouch 120 is resealed to prevent the secondary contamination and accidents from occurring.

Hereinafter, a method for manufacturing the secondary battery according to the first embodiment of the present invention will be described.

### [Method for manufacturing secondary battery according to first embodiment of the present invention]

In a method for manufacturing the secondary battery according to the first embodiment of the present invention, first and second cases 121 and 122 for manufacturing the pouch 120 are prepared. Here, the first and second cases have sizes and shapes corresponding to each other.

That is, the first case 121 comprises a first accommodation surface 121a accommodating one end of the electrode assembly, a first unsealing surface 121b provided on some of edges of the first accommodation surface 121a, and a first sealing surface 121c provided on the rest of the edges of the first accommodation surface 121a.

The second case 122 comprises a second accommodation surface 122a accommodating the other end of the electrode assembly 110, a second unsealing surface 122b provided on some of edges of the second accommodation surface 122a, and a second sealing surface 122c provided on the rest of the edges of the second accommodation surface 122a.

Next, the electrode assembly 110 is disposed between the first accommodation surface 121a of the first case 121 and the second accommodation surface 122a of the second case 122, and then the first sealing surface 121c and the second sealing surface 122c are sealed to manufacture a pouch 120. Here, an electrolyte may be injected into the pouch.

Then, in the pouch 120, the first accommodation surface 121a and the second accommodation surface 122a are connected to each other to form an accommodation part 120a accommodating the electrode assembly 110, the first unsealing surface 121b and the second unsealing surface 122b are connected to each other to form a gas discharge part 120c, and the first sealing surface 121c and the second sealing surface 122c are sealed to form a sealing part 120b.

Next, a plurality of self-restoring adhesive members 140 are prepared and then mixed with a first adhesive material 130 at a set ratio to prepare a self-restoring adhesive means 200. Here, the plurality of self-restoring adhesive members 140 are mixed to be uniformly dispersed throughout the first adhesive material 130.

The plurality of self-restoring adhesive members 140 may be bundled together, and then, the first adhesive material 130 may be applied to an outer circumferential surface of the bundle of the self-restoring adhesive members 140 to manufacture the self-restoring adhesive means 200.

Next, the self-restoring adhesive means 200 is inserted into the gas discharge part 120c between the first unsealing surface 121b and the second unsealing surface 122b. Then, the first unsealing surface 121b and the second unsealing surface 122b may adhere to each other by the first adhesive material 130 to seal the gas discharge part 120c. Here, the plurality of self-restoring adhesive members 140 are attached to the first unsealing surface 121b and the second unsealing surface 122b together with the first adhesive material 130.

When this process is completed, a finished secondary battery 100 may be manufactured.

Thereafter, in the finished secondary battery 100, the pouch 120 is gradually expanded as a gas pressure inside the pouch 120 increases. At this time, the first adhesive material 130, which has weaker adhesive force than that of the sealing part 120b of the pouch 120, may be broken, and thus, a gap between the first unsealing surface 121b and the second unsealing surface 122b may be gradually widened to open the gas discharge part 120c, thereby discharging the gas inside the pouch 120 to the outside.

Here, when the gap between the first unsealing surface 121b and the second unsealing surface 122b is gradually widened, a capsule 142 of the self-restoring adhesive member 140 mixed with the first adhesive material 130 is split or broken, and thus the second adhesive material 141 accommodated in the capsule 142 flows out and is applied to the widened surfaces of the first unsealing surface 121b and the second unsealing surface 122b.

Thereafter, when the internal pressure of the pouch 120 decreases, the first unsealing surface 121b and the second unsealing surface 122b are returned to their original positions by an elastic member 160, and the gap between the first unsealing surface 121b and the second unsealing surface 122b may adhere again to each other by the second adhesive material 141 of the self-restoring adhesive member 140 to reseal the gas discharge part 120c. Particularly, as the gas discharge part 120c is resealed, it is possible to prevent the secondary contamination from occurring.

Hereinafter, in descriptions of another embodiment, not part of the present invention, constituents having the same function as the above-mentioned embodiment have been given the same reference numeral in the drawings, and thus duplicated description will be omitted.

### [Secondary battery according to second embodiment, not part of the present invention]

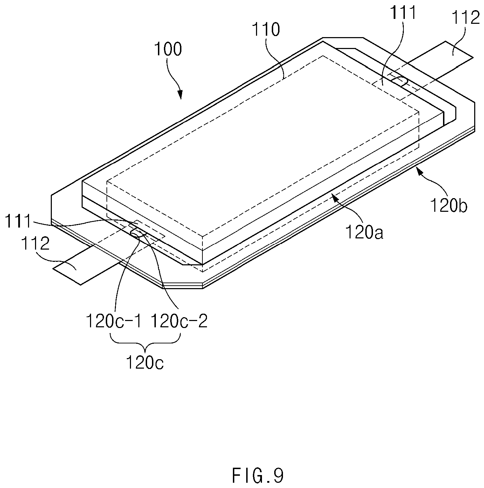

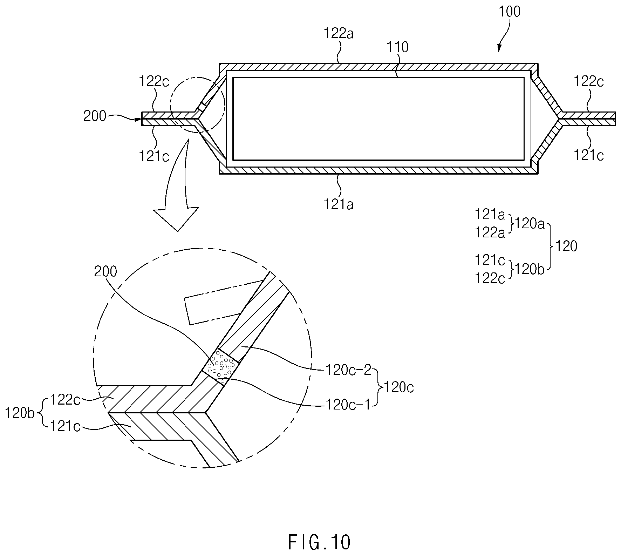

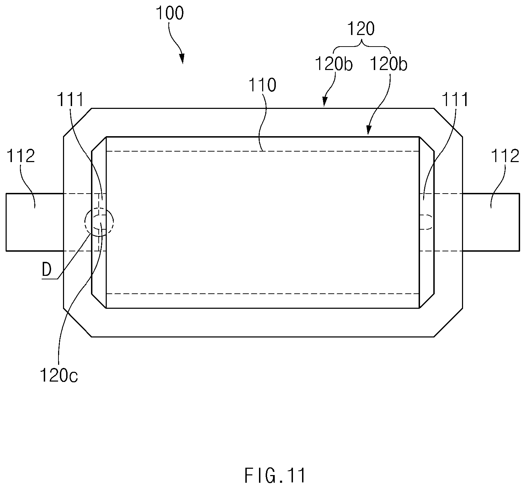

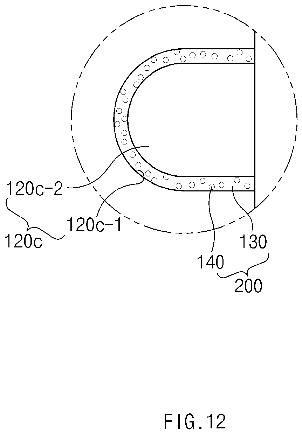

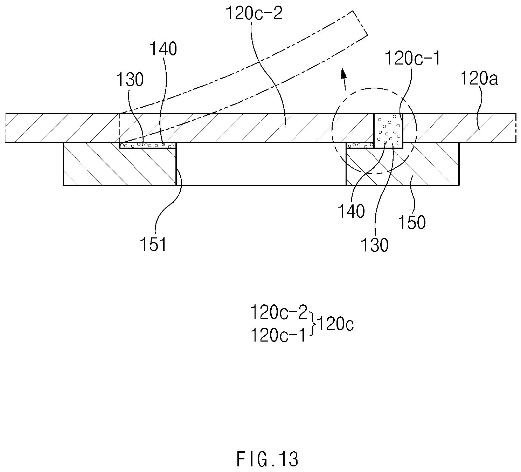

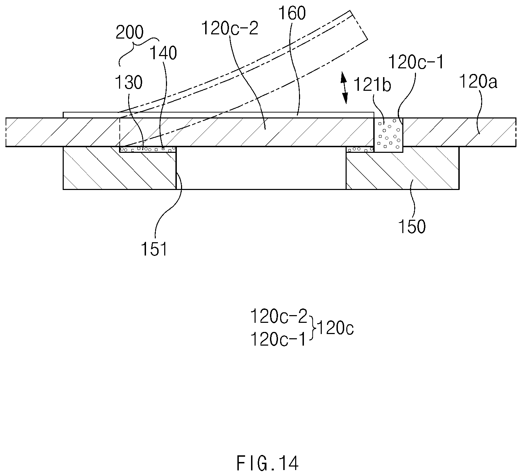

As illustrated in FIGS. 9 to 14, a secondary battery 100 according to a second embodiment, not part of the present invention comprises an electrode assembly 110, a pouch 120 accommodating the electrode assembly 110, and a self-restoring adhesive means 200 that seals a gas discharge part 120c of the pouch 120 so as to open the gas discharge part 120c when an internal pressure of the pouch 120 increases above a set pressure and reseal the gas discharge part 120c when the internal pressure of the pouch 120 decreases below the set pressure.

In addition, the self-restoring adhesive means 200 comprises a first adhesive material 130 that opens the gas discharge part 120c while adhesive force is broken when a pressure within the pouch 120 increases, and a self-restoring adhesive member 140, which reseals the opened gas discharge part 120 through adhesive force when the pressure within the pouch 120 decreases to prevent a gas from being discharged to the gas discharge part 120c.

The electrode assembly 110 has the same configuration as the electrode assembly described in the first embodiment, and thus duplicated descriptions will be omitted.

### Pouch

The pouch 120 is configured to accommodate the electrode assembly 110 and comprises an accommodation part 120a accommodating the electrode assembly 110, a sealing part 120b sealing the accommodation part 120a, and a gas discharge part 120c discharging a gas generated in the accommodation part 120a.

The pouch 120 is formed by bonding a first case 121 and a second case 122 having shapes corresponding to each other.

That is, the first case 121 is provided with a first accommodation surface 121a accommodating one end of the electrode assembly 110 and a first sealing surface 121c provided on an edge of the first accommodation surface 121a. The second case 122 is provided with a second accommodation surface 122a accommodating the other end of the electrode assembly 110 and a second sealing surface 122c provided on an edge of the second accommodation surface 122a.

In the first and second cases 121 and 122 having the above-described structure, the first accommodation surface 121a and the second accommodation surface 122a are connected to each other to form the accommodation part 120a accommodating the electrode assembly 110, and the first sealing surface 121c and the second sealing surface 122c are sealed to form a sealing part 120b.

Also, the gas discharge part 120c comprises a discharge port 120c-1 formed on the first accommodation surface 121a or the second accommodation surface 122a and an opening/closing surface 120c-2, of which one end blocks the discharge port 120c-1 in a state of being connected to the first accommodation surface 121a or the second accommodation surface 122a.

Here, the opening/closing surface 120c-2 is formed by cutting three surfaces except for one of four surfaces partitioned in a box shape on a surface of the accommodation part 120a. That is, one end of the opening/closing surface 120c-2, which is not cut, is formed to be integrally connected to the accommodation part 120a. Thus, the opening/closing surface 120c-2 has elastic restoring force while being bent based on the one end that is not cut when a gas within the pouch 120 is discharged. As a result, when the gas within the pouch 120 is completely discharged, the opening/closing part is restored to its original position by the elastic restoring force stored in the one end thereof to finish the gas discharge port 120c-1 again.

The gas discharge part 120c is formed toward the accommodation part 120a in which an electrode lead 112 and a sealing part 120b, which have the weakest sealing force, are disposed. Thus, when the gas pressure inside the pouch 120 increases, the discharge port 120c-1 may be opened first before a gap between the electrode lead 112 and the sealing part 120b is opened.

### First adhesive material

A first adhesive material 130 seals the gas discharge part 120c with adhesive force, and when the pressure inside the pouch 120 increases, the adhesive force is broken to open the gas discharge part 120c.

That is, the first adhesive material 130 is applied between an inner circumferential surface of the discharge port 120c-1 and an outer circumferential surface of the opening/closing surface 120c-2, and thus the inner circumferential surface of the discharge port 120c-1 and the outer circumferential surface of the opening/closing surface 120c-2 adhere to each other by adhesive force to seal the gas discharge part 120c. Thereafter, when the internal pressure of the pouch 120 increases, the adhesive force between the inner circumferential surface of the discharge port 120c-1 and the outer circumferential surface of the opening/closing surface 120c-2 is broken to open the gas discharge part 120c.

The adhesive force of the first adhesive material 130 has adhesive force less than that between the first sealing surface 121c and the second sealing surface 122c. Thus, when the gas pressure inside the pouch 120 increases, the discharge port 120c-1 may be opened first before the gap between the electrode lead 112 and the sealing part 120b is opened.

The first adhesive material 130 is made of the same material as the first adhesive material 130 described in the first embodiment.

### Self-restoring adhesive member

The self-restoring adhesive member 140 is provided with a second adhesive material 141 and a capsule 142, in which the second adhesive material 141 is embedded, and is attached between the inner circumferential surface of the discharge port 120c-1 and the outer circumferential surface of the opening/closing surface 120c-2 by the first adhesive material.

That is, in the self-restoring adhesive member 140, when a gap between the inner circumferential surface of the discharge port 120c-1 and the outer circumferential surface of the opening/closing surface 120c-2 is widened by a gas discharged to the gas discharge part 120c, the capsule 142 is split or broken, and thus, the second adhesive material 141 flows out. As a result, the inner circumferential surface of the discharge port 120c-1 and the outer circumferential surface of the opening/closing surface 120c-2 adhere again to each other by the second adhesive material 141, which flows out, to reseal the gas discharge part 120c. Accordingly, the self-restoring adhesive member 140 may prevent the electrolyte and gas remaining inside the pouch 120 from being continuously discharged to prevent secondary contamination and accidents from occurring.

The capsule 142 may be made of a material that is removed while being melted by a set temperature or split or broken by external force.

In the self-restoring adhesive member 140 having such the structure, when the opening/closing surface 120c-2 is widened from the discharge port 120c-1 by the gas discharged through the discharge port 120c-1, the capsule 142 is split or broken, and thus, the second adhesive material 141 flows out to be applied to the discharge port 120c-1 and the opening/closing surface 120c-2. Thereafter, when the pressure inside the pouch 120 decreases, the opening/closing surface 120c-2 covers the discharge port 120c-1, and at this time, the inner circumferential surface of the discharge port 120c-1 and the outer circumferential surfaces of the opening/closing surface 120c-2 adhere again to each other by the second adhesive material 141 to reseal the gas discharge part 120c.

The secondary battery 100 according to the first embodiment of the present invention comprises an insulator 150 for preventing the opening/closing surface 120c-2 from being introduced into the discharge port 120c-1.

### Insulator

The insulator 150 is provided on an inner surface of the accommodation part 120a, in which the discharge port 120c-1 is formed, and has a through-hole 151 having a size less than that of the gas discharge port 120c-1 to support the opening/closing surface 120c-2 disposed in the discharge port 120c-1 to prevent the opening/closing surface 120c-2 from being introduced into the pouch 120. Thus, the opening/closing surface 120c-2 and the discharge port 120c-1 may effectively adhere to each other to be sealed.

Particularly, the self-restoring adhesive means 200 may be further provided between the insulator 150 and the opening/closing surface 120c-2 to significantly improve the sealing force between the opening/closing surface 120c-2 and the discharge port 120c-1.

The pouch 120 further comprises an elastic member 160 that provides elastic force to maintain the state in which the opening/closing surface 120c-2 blocks the discharge port 120c-1.

### Elastic member

The elastic member 160 has a central point attached to one end of the opening/closing surface 120c-2, and both ends attached to extend to an end of the opening/closing surface 120c-2 and a set point of the accommodation part 120a.

Thus, when the gas inside the pouch 120 is discharged through the discharge port 120c-1, the opening/closing surface 120c-2 is bent out of the pouch 120 by the gas pressure. At this time, the elastic member 160 is bent together with the opening/closing surface 120c-2 to store elastic restoring force. Thereafter, when a certain amount of gas inside the pouch 120 is discharged, the opening/closing surface 120c-2 rapidly returns to its original position by the elastic force of the elastic member 160 to finish the gas discharge port 120c-1.

Therefore, the secondary battery 100 according to the first embodiment of the present invention may quickly discharge the gas generated inside the pouch 120 to the outside through an opening/closing part and the discharge port 120c-1, and then, when the gas discharge proceeds to some extent, the opening/closing part and the discharge port 120c-1 may be resealed through the self-restoring adhesive member 140 to prevent the electrolyte and gas inside the pouch 120 from being continuously discharged. As a result, safety may be improved, and secondary contamination and accidents may be prevented.

Hereinafter, a method for manufacturing the secondary battery according to the second embodiment, not part of the present invention will be described.

### [Method for manufacturing secondary battery according to second embodiment, not part of the present invention]

In a method for manufacturing a secondary battery according to a second embodiment, not part of the present invention, a second adhesive material 141 is prepared and then injected into a capsule 142 to prepare a self-restoring adhesive member 140.

Next, a plurality of self-restoring adhesive members 140 and a first adhesive material 130 are mixed at a set weight percent to prepare a self-restoring adhesive means 200.

Next, a first case 121 and a second case 122 for manufacturing a pouch 120 are prepared, and three surfaces of fourth surfaces, which are partitioned in a box shape, of a surface of a first accommodation surface 121a of the first case or a second accommodation surface 122a of the second case 122 is cut to form a discharge port 120c-1 and an opening/closing surface 120c-2 that opens and closes the discharge port 120c-1.

Hereinafter, the first accommodation surface 121a or the second accommodation surface 122a on which the opening/closing surface 120c-2 is formed will be described as being integrated as an accommodation part 120a.

Here, the opening/closing surface 120c-2 is formed toward the accommodation part 120a of the pouch 120 in which an electrode tab 111 connected to an electrode assembly 110 is disposed.

An insulator 150 having a through-hole 151 having a size less than that of the discharge port 120c-1 is attached to an inner surface of the accommodation part 120a in which the discharge port 120c-1 is formed. That is, the insulator 150 may be attached to the inner surface of the accommodation part 120a to prevent the opening/closing surface 120c-2 from being introduced into the pouch 120, and also, the discharge port 120c-1 may be effectively finished through supporting force of the opening/closing surface 120c-2 and the insulator 150.

Next, the self-restoring adhesive means may be inserted between the opening/closing surface 120c-2 and the discharge port 120c-1 of the accommodation part 120a to allow an outer circumferential surface of the opening/closing surface 120c-2 and an inner circumferential surface of the discharge port 120c-1 to adhere to each other, thereby sealing the gas discharge part 120c.

Next, the electrode assembly 110 and the electrolyte are accommodated between the first accommodation surface 121a of the first case 121 and the second accommodation surface 122a of the second case 122, and then a first sealing surface 121c of the first case 121 and a second sealing surface 122c of the second case 122 are sealed. Then, the finished secondary battery 100 may be manufactured.

Thereafter, in the finished secondary battery 100, the gas pressure inside the pouch 120 gradually increases. Here, when the gas pressure inside the pouch 120 increases above adhesive force of the first adhesive material 130, the first adhesive material 130 is gradually broken to allow the opening/closing surface 120c-2 from being bent out of the accommodation part, thereby the gas inside the pouch 120 from being discharged to the outside while opening the discharge port 120c-1.

Here, when the inner circumferential surface of the discharge port 120c-1 and the outer circumferential surface of the opening/closing surface 120c-2 are widened, the capsule 142 of the self-restoring adhesive member 140 is split or broken, and thus, the second adhesive material 141 flows out. As a result, the second adhesive material 141, which flows out, is applied to the inner circumferential surface of the discharge port 120c-1 and the outer circumferential surface of the opening/closing surface 120c-2.

Thereafter, when the gas pressure inside the pouch 120 deceases below a set pressure, the opening/closing surface 120c-2 is returned to its original position by the elastic member 160 to finish the discharge port 120c-1. At this time, as the opening/closing surface 120c-2 is supported by the insulator 150 attached to the inner surface of the pouch 120, the opening/closing surface 120c-2 may be prevented from being introduced into the pouch 120. In addition, the inner circumferential surface of the discharge port 120c-1 and the outer circumferential surface of the opening/closing surface 120c-2 may adhere again to each other by the second adhesive material 141 to reseal the gas discharge part 120c.

Accordingly, the scope of the present invention is defined by the appended claims.

### [Description of the Symbols]

100: Secondary battery
110: Electrode assembly
111: Electrode tab
112: Electrode lead
120: Pouch
120a: Accommodation part
120b: Sealing part
120c: Discharge part
120c-1: Discharge port
120c-2: Opening/closing surface
121: First case
121a: First accommodation surface
121b: First unsealing surface
121c: First sealing surface
122: Second case
122a: Second accommodation surface
122b: Second unsealing surface
122c: Second sealing surface
130: First adhesive material
140: Self-restoring adhesive member
141: Second adhesive material
142: Capsule
150: Insulator
151: Through-hole
160: Elastic member

## Claims

1. A secondary battery (100) comprising:
an electrode assembly (110);
a pouch (120) in which the electrode assembly (110) is accommodated and provided with a gas discharge part (120c);
a first adhesive material (130) which is configured to seal the gas discharge part (120c) through adhesive force, wherein, when a pressure within the pouch (120) increases above a set pressure, the adhesive force of the first adhesive material (130) is broken to open the gas discharge part (120c); and
a self-restoring adhesive member (140) configured to reseal the opened gas discharge part (120c) through the adhesive force,
wherein the pouch (120) comprises:
a first case (121) provided with a first accommodation surface (121a) configured to accommodate one end of the electrode assembly (11), a first unsealing surface (121b) provided on a portion of an edge of the first accommodation surface (121a), and a first sealing surface (121c) provided on a remaining portion of the edge of the first accommodation surface (121a); and
a second case (122) provided with a second accommodation surface (122a) configured to accommodate the other end of the electrode assembly (110), a second unsealing surface (122b) provided on a portion of an edge of the second accommodation surface (122a), and a second sealing surface (122c) provided on a remaining portion of the edge of the second accommodation surface (122a),
wherein the gas discharge part (120c) is formed between the first unsealing surface (121b) and the second unsealing surface (122b), which correspond to each other,
the first adhesive material (130) is provided between the first unsealing surface (121b) and the second unsealing surface (122b), and the first unsealing surface (121b) and the second unsealing surface (122b) adhere to each other to seal the gas discharge part (120c), wherein, when the pressure within the pouch (120) increases above the set pressure, adhesive force between the first unsealing surface (121b) and the second unsealing surface (122b) is broken to open the gas discharge part (120C),
the self-restoring adhesive member (140) is provided with a second adhesive material (141) and a capsule (142) in which the second adhesive material (141) is embedded and adheres between the first unsealing surface (121b) and the second unsealing surface (122b) by the first adhesive material (130), and
in the self-restoring adhesive member (140), when a gap between the first unsealing surface (121b) and the second unsealing surface (122b) is widened by the gas discharged to the gas discharge part (120c), the capsule (142) is split or broken to allow the second adhesive material (141) to flow out so that the first unsealing surface (121b) and the second unsealing surface (122b)adhere again to each other by the second adhesive material (141) that flows out,
wherein the self-restoring adhesive member (140) is provided in plurality, and
the plurality of self-restoring adhesive members (140) are provided to be dispersed throughout the first adhesive material (130),and
wherein the pouch (120) is provided with an elastic member (160) configured to provide elastic force so that the first unsealing surface (121b) and the second unsealing surface (122b) are maintained in a close contact with each other.

2. The secondary battery (100) of claim 1, wherein the first adhesive material (130) is provided as an epoxy resin adhesive.

3. The secondary battery (100) of claim 2, wherein the second adhesive material (141) is provided as the same material as the first adhesive material (130).

4. The secondary battery (100) of claim 1, wherein the first adhesive material (130) has adhesive strength less than that between the first sealing surface (121c) and the second sealing surface (122c).

5. The secondary battery (100) of claim 1, wherein the gas discharge part (120c) is formed on a pouch (120) in which an electrode tab provided in the electrode assembly (110) is disposed.

6. The secondary battery (100) of claim 1, wherein the capsule (142) is made of a thermoplastic resin material and has a diameter of 3 µm to 5 µm.

## Patentansprüche

1. Sekundärbatterie (100), umfassend:
eine Elektrodenanordnung (110);
einen Beutel (120), in welchem die Elektrodenanordnung (110) aufgenommen ist und welcher mit einem Gas-Auslassteil (120c) bereitgestellt ist;
ein erstes Haftmaterial (130), welches dazu eingerichtet ist, den Gas-Auslassteil (120c) durch Haftkraft zu versiegeln, wobei, wenn ein Druck innerhalb des Beutels (120) über einen festgelegten Druck ansteigt, die Haftkraft des ersten Haftmaterials (130) gebrochen wird, um den Gas-Auslassteil (120c) zu öffnen; und
ein sich selbst wiederherstellendes Haftelement (140), welches dazu eingerichtet ist, den geöffneten Gas-Auslassteil (120c) durch die Haftkraft erneut zu versiegeln,
wobei der Beutel (120) umfasst:
ein erstes Gehäuse (121), welches mit einer ersten Aufnahmefläche (121a), welche dazu eingerichtet ist, ein Ende der Elektrodenanordnung (11) aufzunehmen, einer ersten Entsiegelungsfläche (121b), welche an einem Abschnitt eines Rands der ersten Aufnahmefläche (121a) bereitgestellt ist, und einer ersten Versiegelungsfläche (121c) bereitgestellt ist, welche an einem verbleibenden Abschnitt des Rands der ersten Aufnahmefläche (121a) bereitgestellt ist; und
ein zweites Gehäuse (122), welches mit einer zweiten Aufnahmefläche (122a), welche dazu eingerichtet ist, das andere Ende der Elektrodenanordnung (110) aufzunehmen, einer zweiten Entsiegelungsfläche (122b), welche an einem Abschnitt eines Rands der zweiten Aufnahmefläche (122a) bereitgestellt ist, und einer zweiten Versiegelungsfläche (122c) bereitgestellt ist, welche an einem verbleibenden Abschnitt des Rands der zweiten Aufnahmefläche (122a) bereitgestellt ist,
wobei der Gas-Auslassteil (120c) zwischen der ersten Entsiegelungsfläche (121b) und der zweiten Entsiegelungsfläche (122b) gebildet ist, welche einander entsprechen,
das erste Haftmaterial (130) zwischen der ersten Entsiegelungsfläche (121b) und der zweiten Entsiegelungsfläche (122b) bereitgestellt ist und die erste Entsiegelungsfläche (121b) und die zweite Entsiegelungsfläche (122b) aneinander anhaften, um den Gas-Auslassteil (120c) zu versiegeln, wobei, wenn der Druck innerhalb des Beutels (120) über den festgelegten Druck ansteigt, eine Haftkraft zwischen der ersten Entsiegelungsfläche (121b) und der zweiten Entsiegelungsfläche (122b) gebrochen wird, um den Gas-Auslassteil (120C) zu öffnen,
das sich selbst wiederherstellende Haftelement (140) mit einem zweiten Haftmaterial (141) und einer Kapsel (142) bereitgestellt ist, in welcher das zweite Haftmaterial (141) eingebettet ist und zwischen der ersten Entsiegelungsfläche (121b) und der zweiten Entsiegelungsfläche (122b) durch das erste Haftmaterial (130) anhaftet, und in dem sich selbst wiederherstellenden Haftelement (140), wenn ein Spalt zwischen der ersten Entsiegelungsfläche (121b) und der zweiten Entsiegelungsfläche (122b) durch das Gas aufgeweitet wird, welches an den Gas-Auslassteil (120c) ausgelassen wird, die Kapsel (142) gespalten oder gebrochen wird, um es dem zweiten Haftmaterial (141) zu erlauben, auszuströmen, so dass die erste Entsiegelungsfläche (121b) und die zweite Entsiegelungsfläche (122b) erneut aneinander durch das zweite Haftmaterial (141) anhaften, welches ausströmt, wobei das sich selbst wiederherstellende Haftelement (140) in einer Mehrzahl bereitgestellt ist, und
die Mehrzahl von sich selbst wiederherstellenden Haftelementen (140) dazu bereitgestellt sind, über das erste Haftmaterial (130) verteilt zu sein, und
wobei der Beutel (120) mit einem elastischen Element (160) bereitgestellt ist, welches dazu eingerichtet ist, eine elastische Kraft bereitzustellen, so dass die erste Entsiegelungsfläche (121b) und die zweite Entsiegelungsfläche (122b) in engem Kontakt miteinander gehalten werden.

2. Sekundärbatterie (100) nach Anspruch 1, wobei das erste Haftmaterial (130) als ein Epoxidharz-Haftmittel bereitgestellt ist.

3. Sekundärbatterie (100) nach Anspruch 2, wobei das zweite Haftmittel (141) als dasselbe Material wie das erste Haftmittel (130) bereitgestellt ist.

4. Sekundärbatterie (100) nach Anspruch 1, wobei das erste Haftmittel (130) eine Haftstärke aufweist, welche geringer als diejenige zwischen der ersten Versiegelungsfläche (121c) und der zweiten Versiegelungsfläche (122c) ist.

5. Sekundärbatterie (100) nach Anspruch 1, wobei der Gas-Abgabeteil (120c) an einem Beutel (120) gebildet ist, in welchem ein Elektrodenstreifen angeordnet ist, welcher in der Elektrodenanordnung (110) bereitgestellt ist.

6. Sekundärbatterie (100) nach Anspruch 1, wobei die Kapsel (142) aus einem thermoplastischen Harzmaterial hergestellt ist und einen Durchmesser von 3 µm bis 5 µm aufweist.

## Revendications

1. Batterie secondaire (100) comprenant :
un ensemble d'électrodes (110) ;
une poche (120) dans laquelle est logé l'ensemble d'électrodes (110) et dotée d'une partie de décharge de gaz (120c) ;
un premier matériau adhésif (130) qui est configuré pour sceller la partie de décharge de gaz (120c) au moyen d'une force adhésive, dans lequel, lorsqu'une pression à l'intérieur de la poche (120) augmente au-dessus d'une pression réglée, la force adhésive du premier matériau adhésif (130) est rompue pour ouvrir la partie de décharge de gaz (120c) ; et
un organe adhésif auto-régénérateur (140) configuré pour resceller la partie de décharge de gaz (120c) ouverte au moyen de la force adhésive,
dans laquelle la poche (120) comprend :
un premier boîtier (121) doté d'une première surface de logement (121a) configurée pour loger une extrémité de l'ensemble d'électrodes (11), d'une première surface de descellement (121b) prévue sur une partie d'un bord de la première surface de logement (121a), et d'une première surface de scellement (121c) prévue sur une partie restante du bord de la première surface de logement (121a) ; et
un deuxième boîtier (122) doté d'une deuxième surface de logement (122a) configurée pour loger l'autre extrémité de l'ensemble d'électrodes (110), d'une deuxième surface de descellement (122b) prévue sur une partie d'un bord de la deuxième surface de logement (122a), et d'une deuxième surface de scellement (122c) prévue sur une partie restante du bord de la deuxième surface de logement (122a),
dans laquelle la partie de décharge de gaz (120c) est formée entre la première surface de descellement (121b) et la deuxième surface de descellement (122b), qui correspondent l'une à l'autre,
le premier matériau adhésif (130) est disposé entre la première surface de descellement (121b) et la deuxième surface de descellement (122b), et la première surface de descellement (121b) et la deuxième surface de descellement (122b) adhèrent l'une à l'autre pour sceller la partie de décharge de gaz (120c), dans lequel, lorsque la pression à l'intérieur de la poche (120) augmente au-dessus de la pression réglée, la force adhésive entre la première surface de descellement (121b) et la deuxième surface de descellement (122b) est rompue pour ouvrir la partie de décharge de gaz (120C),
l'organe adhésif auto-régénérateur (140) est doté d'un deuxième matériau adhésif (141) et d'une capsule (142) dans laquelle le deuxième matériau adhésif (141) est intégré et adhère entre la première surface de descellement (121b) et la deuxième surface de descellement (122b) au moyen du premier matériau adhésif (130), et
dans l'organe adhésif auto-régénérateur (140), lorsqu'un espace entre la première surface de descellement (121b) et la deuxième surface de descellement (122b) est élargi par le gaz déchargé vers la partie de décharge de gaz (120c), la capsule (142) est fendue ou cassée pour permettre l'écoulement du deuxième matériau adhésif (141) de sorte que la première surface de descellement (121b) et la deuxième surface de descellement (122b) adhèrent à nouveau l'une à l'autre au moyen du deuxième matériau adhésif (141) qui s'écoule,
dans laquelle l'organe adhésif auto-régénérateur (140) est fourni en une pluralité, et la pluralité d'organes adhésifs auto-régénérateurs (140) sont prévus pour être dispersés à travers le premier matériau adhésif (130), et
dans laquelle la poche (120) est dotée d'un organe élastique (160) configuré pour fournir une force élastique de sorte que la première surface de descellement (121b) et la deuxième surface de descellement (122b) soient maintenues en contact étroit l'une avec l'autre.

2. Batterie secondaire (100) selon la revendication 1, dans laquelle le premier matériau adhésif (130) est fourni sous la forme d'un adhésif à base de résine époxy.

3. Batterie secondaire (100) selon la revendication 2, dans laquelle le deuxième matériau adhésif (141) est fourni sous la forme du même matériau que le premier matériau adhésif (130).

4. Batterie secondaire (100) selon la revendication 1, dans laquelle le premier matériau adhésif (130) a une force adhésive inférieure à celle entre la première surface de scellement (121c) et la deuxième surface de scellement (122c).

5. Batterie secondaire (100) selon la revendication 1, dans laquelle la partie de décharge de gaz (120c) est formée sur une poche (120) dans laquelle est disposée une patte d'électrode prévue dans l'ensemble d'électrodes (110).

6. Batterie secondaire (100) selon la revendication 1, dans laquelle la capsule (142) est constituée d'un matériau de résine thermoplastique et a un diamètre de 3 *µm* à 5 *µm.*
